# EUROPEAN PATENT APPLICATION

(11) **EP 3 075 527 A1**
(43) Date of publication of application: **05.10.2016**
(21) Application number: 16161231.2
(22) Date of filing: 18.03.2016
(51) Int. Cl.: B32B 5/02, B32B 5/26, B32B 7/12

(54) **SUPPORT FOR CONTAINERS AND ITS MANUFACTURING PROCESS**

(30) Priority: 01.04.2015 BR 102015007454
(71) Applicant: Neobrand Industria Textil Ltda., 13460-000 Sao Paulo (BR)
(72) Inventor: SUZIGAN, Fernando Antonio, BR - 13466-330 AMERICANA/SP (BR)
(74) Representative: Lunati & Mazzoni S.r.L.

(57) **Abstract**

Said support for containers herein described was developed with the intrinsic purpose to protect the support surface of these containers from external fluids resulting from temperature changes, due to the condensation of molecules and air droplets around the container, generating steam, and consequently forming droplets on the external side of said containers. The manufacturing process herein described and referred to makes the manufacturing and obtaining of said support for containers substantially more simplified and faster, and results in a more efficient, durable and reusable product.

## Description

### Technical Field

The present invention refers to a new support for containers manufacturing process and the product obtained by this process.

The support for containers herein described was developed with the intrinsic purpose to protect the support surface of said containers from external fluids resulting from temperature changes, due to the condensation of molecules and air droplets around the container, generating steam, and consequently forming droplets on the external side of said containers.

The manufacturing process herein described and referred to makes the manufacturing and obtaining of said support for containers substantially more simplified and faster, and results in a more efficient, durable and reusable product. Said support for containers is provided with innovative characteristics, and presents a more sophisticated and elegant formal structure, being more suitable for its industrial feasibility, besides providing great convenience and extended useful life.

### State of the Art

According to the common and notorious knowledge, when a drink is served at a low temperature, in comparison to the room temperature, the container in which the drink is discharged, like a glass, a bottle, a jar, a mug, etc., causes the condensation of vapor droplets around it, resulting in the formation of droplets on the outer walls of the container typically made of glass or plastic, due to the tendency of the elements - drink, steam and air - to achieve the balance of temperature.

The drops formed on the external walls of the container start to drain, by gravity, until they reach the surface over which said container is supported.

This causes the wetting of the surface and may cause damages to the furniture - table, balcony, dresser, etc. - if it is made, for example, of wood. Depending on the size of the container and the temperature difference between the drink and the environment, these drops can effectively soak the surface, aggravating the potential damages to the furniture.

Supports for containers were developed a long time ago, especially for glasses and bottles, to suppress and eliminate such inconveniences.

The history of the supports for containers, for example, known as beer "cookies", date from the 19th century, when the first records of such matter report that around 1880, in the German city of Weisenbach, the first supports handmade of heavyweight cardboard appeared, very similar to the supports still in use today. Over the time, its dimensions and formal aspects have changed, so that there are numerous supports for containers available today, similar to those "cookies" with various formats and dimensions, produced from a multitude of different materials. A brief search on the major patent data base revealed some documents pertinent to this matter, such as the Brazilian patent MU9002529, which describes a support/rest made of injected TPE with ferromagnetic inserts in its inside, consisting for this purpose of a rest for a glass with a cylindrical format of injected TPE (thermoplastic elastomer), which contains ferromagnetic inserts inside and which also has a free area on its surface for advertisements.

Additionally to this model, it was found the Brazilian patent MU8902689, which reveals a rest with 3 layers, the upper layer made of absorbent paper, the intermediate layer made of an absorbent film and the lower layer made of cardboard, said support designed for tulip shaped beer glasses and beers, popularly referred to as "cookies", which absorbs the waste of drink and water that drains down the glass, and adheres to the same, not allowing it to precipitate on the table, on the clothes or even on the floor, characterized by providing a support composed of three layers superimposed over each other and secured with glue, containing several geometric shapes; the top layer being made of absorbent paper, consisting of radially cut out sections starting from the support axis, to be lifted and provide an opening large enough to "embrace" the base of the tulip or glass; the intermediate layer consisting of an absorbent film which reinforces the moisture absorption; and the lower layer, which forms the basis of the support, made of cardboard; these layers are also produced from recyclable biodegradable materials, thereby allowing several reuse times by the wrapping process provided in the manufacturing and packaging process; and also allowing to receive printed brands, messages, warnings and merchandising at strategic points of their surfaces.

Finally, the patent WO 2004018193 was found, which discloses a laminar rest with interlining "nonwoven" material (material made of interlaced fibers of polypropylene) with durability and moisture absorption characteristics, this document being closer to the matter which is now being claimed by the applicant and which comprises a first layer comprising a nonwoven web of thermoplastic material, a second layer comprising hot air meltable thermoplastic filaments, said first and second layers being adjacent to each other and bonded together; and an antiskid coating that is applied on one side of at least one of the first and second layers not adjacent to the other layer.

### Brief Description of the Invention

Thinking about these drawbacks and requirements of the technical field, and interested in providing improvements to the consumer market, the inventor, after extensive research, created and developed the present "SUPPORT FOR CONTAINERS AND ITS MANUFACTURING PROCESS", which should position itself with total prominence among its congeners and customize itself to the consumer market by the fact of presenting, as one of its main objectives, a manufacturing process of a support for containers, especially glasses and bottles, substantially simplified in its industrial feasibility, through which one gets a support consisting of a core of interlining material, covered with a woven material of complex interlaced patterns, of the jacquard type, being joined together through a special adhesive material.

Another objective of this invention is to provide the consumer public with a long life support for containers, made from durable materials and subject to receive advertisements that do not deteriorate over time, said support obtained by the manufacturing process herein described.

### Brief Description of the Drawings

In order to complement this description and to promote a better understanding of the features of the present invention and according to a preferred practical embodiment thereof, a set of drawings accompanies this description, in which, in an exemplified manner, although not limited to, the following is represented:

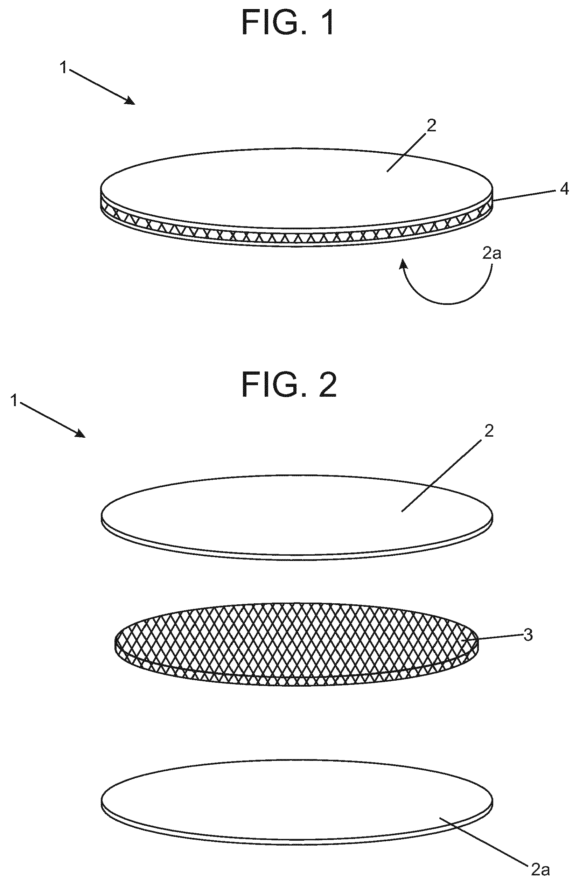

- Figure 1 shows a perspective view of the support for containers;
- Figure 2 shows an exploded perspective view, illustrating the support for containers internally;

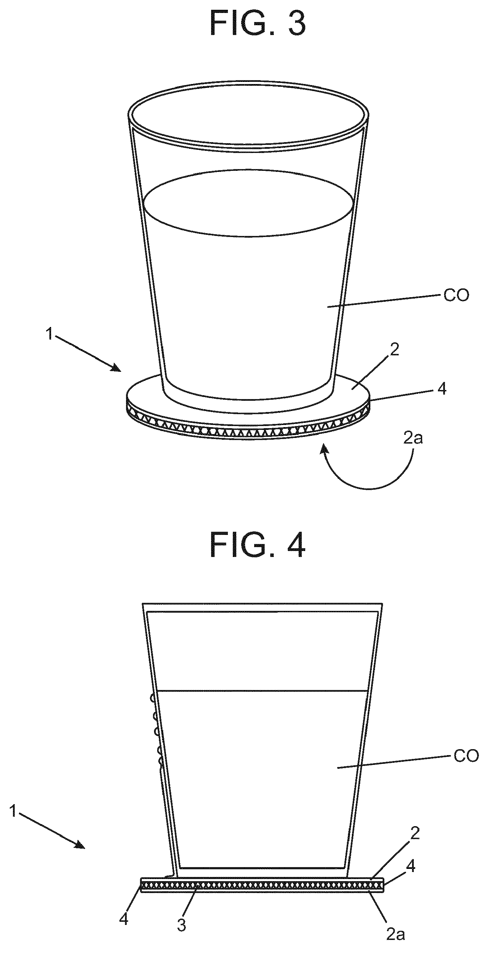

- Figure 3 shows a perspective view of the support for containers with a glass on it;
- Figure 4 shows a side view that illustrates the support, the glass on it and the external droplets dripping down to the base of said glass, being absorbed by the support for containers;

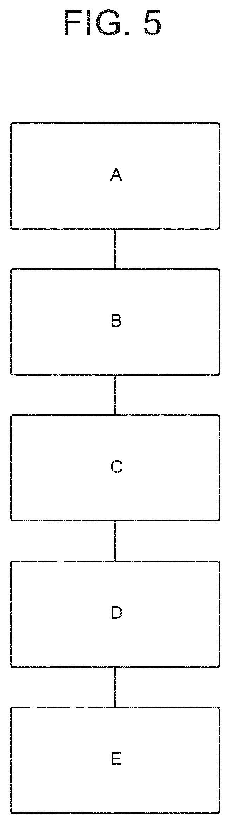

- Figure 5 shows a scheme of the production steps of the support for containers.

The illustrations here presented are of purely representative nature, and may present shape and dimensional variations, however, following the main scope of the present invention.

### Brief Description of the Invention

In accordance with the above mentioned figures, the present invention "SUPPORT FOR CONTAINERS AND ITS MANUFACTURING PROCESS" refers, more particularly, to a process P that starts with the application A of a thermoglueable material on a special nonwoven laminar interlining 3 which receives B subsequently, at least on one of its faces, the flexible laminar portions 2 and 2a made of a textile substrate, said portions being made of complex patterns of interlaced fabrics, joined to the nonwoven interlining 3 with the thermoglueable material.

Said flexible laminar portions 2 and 2a of a textile substrate, made of fabrics with complex patterns, are preferably of the jacquard type, or of other fabric with equivalent characteristics, plain or embossed.

The thermoglueable material consists preferably of Ethyl Vinyl Acetate, known as E.V.A.

Starting from the application A of glue points on the surfaces of the nonwoven interlining 3, said glue points that are activated by exposure C to a temperature ranging from 60°C to 100°C, preferably of 80°C, said flexible laminar portions 2 and 2a of a textile substrate may be personalized, that is, they may receive advertisement prints or any relevant illustrations, said flexible laminar portions 2 and 2a of a textile substrate being usually made, but not invariably, entirely of polyester.

The application of inscriptions D along the flexible laminar portions 2 and 2a of a textile substrate takes place preferentially through hot dubbing, and subsequently, when both are adequately united and settled, they are cut E by Laser in predetermined formats, dimensions and quantities.

Thus, the product obtained and manufactured through the steps A, B, C, D and E, of this process P, consists of a support 1 for containers CO, whose formal structure is multilayered and laminar and that can be presented with a cylindrical shape, oval, square, rectangular or other suitable recreational format, consisting of at least one of the flexible laminar portions 2 and 2a of a textile substrate made of fabrics with complex patterns, preferably of the jacquard type or other fabric with equivalent characteristics, interlaced by a sheet of nonwoven interlining 3, and said support 1 is cut off providing at the same time a peripheral finishing 4 to said support 1, said finishing 4 being produced by Laser or other equivalent means. The sheet of nonwoven interlining 3 is obtained from the agglutination of polyester fibers, a material that provides greater hydrophilicity to the substrate, being made 100% of polyester, with a thickness between 0.3 mm and 0.5 mm, preferably of 0.4 mm, and with the application of a thermoglueable material preferably based on E.V.A. Although the invention was described in details, it is important to understand that its application is not limited to the details and steps herein described. The present invention is capable of other constructive embodiments and may be practiced or executed in a variety of ways and forms. It should be understood that the terminology used herein was selected for the purpose of description and not of limitation.

## Claims

1. Manufacturing process, **characterized in that** it comprises the application A of a thermoglueable material on a special nonwoven laminar interlining 3 which receives B subsequently, at least on one of its faces, the flexible laminar portions 2 and 2a made of a textile substrate, and which are joined to the nonwoven interlining 3 with a thermoglueable material; starting from the application A of glue points on the surfaces of the nonwoven interlining 3, which are activated by exposure C to a temperature ranging from 60°c to 100°c, preferably of 80°c, said flexible laminar portions 2 and 2a of a textile substrate may be personalized, that is, they may receive advertisement prints or any relevant illustrations, said flexible laminar portions 2 and 2a of a textile substrate being usually made, but not invariably, entirely of polyester; following the application of inscriptions D along the flexible laminar portions 2 and 2a of a textile substrate preferentially through hot dubbing, and subsequently, when both are adequately united and settled, they are cut E in predetermined formats, dimensions and quantities.

2. Manufacturing process according to claim 1, **characterized in that** the flexible laminar portions 2 and 2a of a textile substrate are of the jacquard type, or of other fabric with equivalent characteristics.

3. Manufacturing process according to claim 1, **characterized in that** the thermoglueable material consists preferably of Ethyl Vinyl Acetate, known as E.V.A.

4. Manufacturing process according to claim 1, **characterized in that** said support 1 is cut off providing at the same time a peripheral finishing 4 to the support 1, said finishing 4 being produced by Laser or other equivalent means.

5. Support for containers, **characterized in that** it consists of a formal multilayered and laminar structure, comprising at least the flexible laminar portions 2 and 2a of a textile substrate made of fabrics with complex interlaced patterns, of the jacquard type or other fabric with equivalent characteristics, interlaced by a sheet of nonwoven interlining 3 and by a thermoglueable material preferably based on E.V.A.

6. Support according to claim 5, **characterized in that** it comprises a cylindrical shape, oval, square, rectangular or other suitable recreational format.

7. Support according to claim 5, **characterized in that** the sheet of nonwoven interlining 3 is obtained from the agglutination of polyester fibers.

8. Support according to previous claims 5 and 7, **characterized in that** the sheet of nonwoven interlining 3 has a thickness between 0.3 mm and 0.5 mm, preferably of 0.4 mm.
